Europäisches Patentamt

(19) European Patent Office

Office européen des brevets

(11) Numéro de publication: **0 007 887**
**A1**

(12) # DEMANDE DE BREVET EUROPEEN

(21) Numéro de dépôt: **79810065.7**

(22) Date de dépôt: **26.07.79**

(51) Int. Cl.³: **B 23 B 31/20**

(30) Priorité: **31.07.78 CH 8179/78**

(43) Date de publication de la demande:
**06.02.80 Bulletin 80/3**

(84) Etats Contractants Désignés:
**CH DE GB**

(71) Demandeur: **TORNOS S.A. Fabrique de machines Moutier**
**111, rue Industrielle**
**CH-2740 Moutier(CH)**

(72) Inventeur:
**L'inventeur a renonce a sa designation**

(54) **Pince de serrage biconique tirée.**

㊄ Les pinces de serrage tirées sont essentiellement utilisées sur les tours multibroches. Dans la pratique il n'existait
pas jusqu'alors de pinces biconiques tirées, malgré que leur
utilisation serait très utile étant donné les fortes avances lors
de l'usinage sur tours multibroches. La pince selon l'invention
est une pince biconique tirée pouvant être utilisée dans une
broche prévue pour des pinces tirées normales sans modification de la broche. L'arrière de la pince comporte un deuxième
cône (2) qui est incliné vers l'intérieur et ce deuxième cône (2)
est actionné par la partie conique (5) se trouvant à l'intérieur
d'un raccord (4) au tirant de serrage.

Fig. 1

0007887

## Pince de serrage biconique tirée

L'invention concerne une pince biconique tirée.

Les pinces biconiques sont généralement connues. Elles sont utilisées afin d'augmenter la force de serrage, particulièrement lorsque l'on excerce une grande force axiale sur la matière à usiner, p.ex. lors d'un perçage.

Les pinces de serrage peuvent être séparées en deux grandes familles, les pinces tirées et les pinces poussées. De par le principe qui les actionnent, les pinces poussées se prêtent plus facilement à la réalisation d'un serrage biconique. A titre d'exemple nous citons le brevet suisse 175 086 qui présente une solution relativement simple en utilisant deux pinces l'une derrière l'autre avec un tube de serrage qui pousse sur le cône de la première pince et un petit tube entre les deux pinces qui pousse sur l'autre pince lorsque la pression lui est transmise depuis la première pince. Un brevet anglais 1 422 323, plus récent, utilise à la place des pinces classiques deux jeux de mâchoires et prévoit de les utiliser avec

- 2 -

leurs cônes dans la même direction, en direction opposée, une fois les cônes étant inclinés vers l'intérieur et une fois les cônes étant inclinés vers l'extérieur. Ces deux exemples montrent que l'on a trouvé plusieurs solutions dans le domaine des pinces biconiques poussées. Ces pinces poussées sont utilisées spécialement dans les tours automatiques monobroches. Du fait que ces pinces poussées doivent être nettoyées très souvent, l'on n'a pas prévu de mécanismes de serrage à pince poussé sur les tours multibroches. Le nettoyage serait en effet à effectuer bien plus souvent du fait qu'il n'y a pas seulement une pince, mais six ou huit, et parce que l'enlèvement de copeaux se fait d'une manière plus intense, avec des avances plus fortes que sur les tours monobroches, ce qui provoque plus de dépôts.

Pour ces raisons l'on utilise sur les tours automatiques multibroches essentiellement des pinces tirées. Dans ces tours il est particulièrement intéressant de disposer de pinces dont la force de serrage est très grande du fait que les efforts axiaux sont plus importants que sur les tours monobroches.

La pratique montre par contre qu'il n'existe pas de serrage biconique tiré sur les tours multibroches. Il existe par contre le brevet suisse 279 981 qui présente une pince de serrage biconique tirée. Si cette pince n'a pas trouvée de champ d'application sur les tours multibroches, c'est certainement parce qu'elle présente l'inconvénient majeur de nécessiter une broche spéciale avec des éléments mécaniques complémentaires. Il n'est donc pas possible d'utiliser cette pince à la place d'une pince normale dans une broche de tour, sans modifications importantes.

L'invention présente a pour but de mettre à la disposition de l'utilisateur de pinces tirées une pince biconique tirée pouvant être adaptée sans modification dans une broche prévue pour des pinces simples.

La pince de serrage biconique tirée selon l'invention peut être utilisée ainsi parce que les deux cônes sont inclinés l'un vers l'autre et que le deuxième cône est actionné par l'élément de raccord au tirant de serrage qui comporte un cône à l'intérieur.

Les dessins ci-joints présentent à titre d'exemples deux formes d'exécution de pinces serrage selon l'invention.

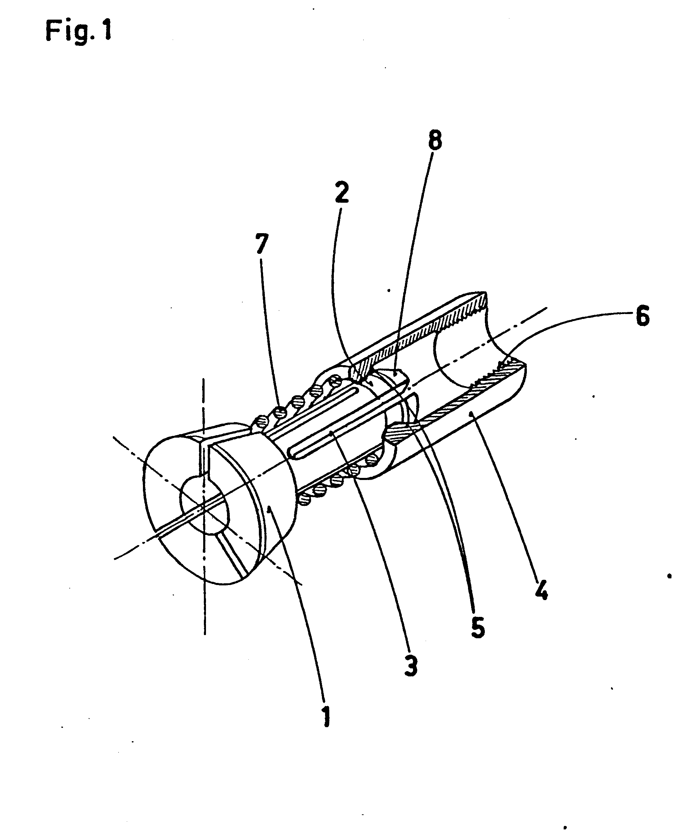

Dans la fig. 1 une exécution d'une pince biconique simple est présentée. Le cône avant est désigné par 1 et le cône arrière par 2. Les fentes particulièrement larges pour permettre de resserrer le cône arrière sont désignées par 3. Le raccord de la pince au tirant de serrage non-présenté est désigné par 4. Ce raccord 4 comporte un cône femelle 5 qui agit conjointement avec le cône 2.

- 4 -

Le tirant de serrage est fixé à la pince par le filetage 6. 7 désigne le ressort qui pousse le raccord 4 contre le cône 2. Ce cône 2 comporte un talon incliné 8 destiné à faciliter le passage du raccord 4 sur le cône 2 pour sa mise en place.

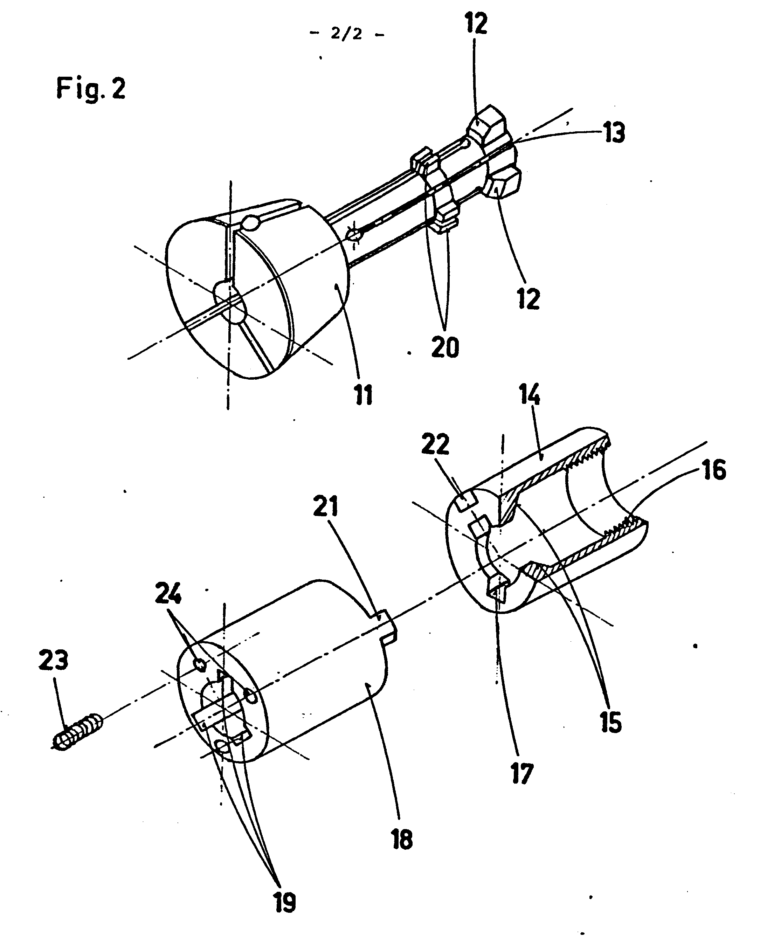

La fig. 2 présente une exécution un peu plus élaborée qui ne nécessite pas le resserrement de l'arrière de la pince pour le passage du raccord. Dans cette figure, le cône avant est désigné par 11, le cône arrière par 12. Des fentes 13 permettent à l'arrière de la pince de serrer la matière. La fonction du raccord 14 consiste à s'appuyer par son cône femelle 15 sur le cône 12 de la pince. Le filet 16 sert à relier la pince au tirant de serrage non-représenté.

Le raccord 14 doit être enfilé sur l'arrière de la pince en faisant passer les cônes 12 par les dégagements 17. C'est par une rotation légère que les cônes 12 et 15 se trouvent placés vis-à-vis. Afin de maintenir ces pièces dans cette position, il faut préalablement enfiler sur la pince la douille 18 dont les entrées 19 passent par les cônes 12 et restent engagés sur les plots 20 qui empêchent la douille 18 de tourner. L'ergot 21 maintient le raccord 14 par l'ouverture 22; les ressorts 23 dans leurs alésages 24 poussant la douille 18 contre le raccord et en assurent la position, l'empêchant de tourner.

- 1 -

REVENDICATIONS

1.
Pince de serrage biconique tirée, comprenant à une extrémité un premier cône en plusieurs éléments, destiné à être introduit dans un cône femelle d'une broche et à l'autre extrémité un deuxième cône en plusieurs éléments c a r a c t é r i s é e en ce que les deux cônes sont inclinés l'un vers l'autre et en ce qu'il y a un élément de raccord à un tirant de serrage, ce raccord étant pourvu à l'intérieur d'une partie conique coopérant avec le deuxième cône.

2.
Pince de serrage selon la revendication 1, caractérisée en ce que le deuxième cône comporte de larges fentes.

3.
Pince de serrage selon la revendication 1, caractérisée en ce que la somme des éléments du deuxième cône représente un peu moins que la moitié de la circonférence et en ce que la partie conique de l'élément de raccord comprend des dégagements correspondant aux éléments du deuxième cône.

- 2 -

4.
Pince de serrage selon les revendications 1 et 3, caractérisée en ce qu'elle comprend en outre une douille à érgot pour bloquer la partie conique de l'élément de raccord en face des éléments du deuxième cône.

5.
Pince de serrage selon la revendication 1, caractérisée en ce que l'inclinaison d'un cône est différente de celle de l'autre cône.

**Fig. 1**

0007887

Fig. 2

0007887

| Catégorie | Citation du document avec indication, en cas de besoin, des parties pertinentes | Revendication concernée |
|---|---|---|
| | **DOCUMENTS CONSIDERES COMME PERTINENTS** | |
| X | GB - A - 476 416 (BECHLER)  * Page 1, lignes 88-106; page 2, lignes 1-2; figure 1 * | 1 |
| | -- | |
| A | FR - A - 2 131 091 (BECHET) | |
| A | FR - A - 1 529 244 (LANDIS) | |
| A | US - A - 3 083 976 (STARK) | |
| A | US - A - 2 935 329 (HESSLER) | |
| | ---- | |

**CLASSEMENT DE LA DEMANDE (Int. Cl. 3)**

B 23 B 31/20

**DOMAINES TECHNIQUES RECHERCHES (Int. Cl. 3)**

B 23 B 31/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 23-10-1979 | BOGAERT |

OEB Form 1503.1  06.78